# FASCICULE DE BREVET EUROPEEN

(11) **EP 3 085 674 B1**
(45) Date de publication et mention de la délivrance du brevet: **26.06.2019**
(21) Numéro de dépôt: 16305458.8
(22) Date de dépôt: 20.04.2016
(51) Int. Cl.: C04B 26/00, C04B 26/26, C04B 28/00, C04B 111/00, C04B 111/80

(54) **REVÊTEMENTS DE CIRCULATION OU ÉLÉMENTS CONNEXES RÉFLÉCHISSANTS, ET COMPOSITION CORRESPONDANTE**
FAHRBAHNBESCHICHTUNGEN ODER REFLEKTIERENDE VERBUNDENE ELEMENTE, UND ENTSPRECHENDE ZUSAMMENSETZUNG
REFLECTIVE TRAFFIC COATINGS OR CONNECTED ELEMENTS, AND CORRESPONDING COMPOSITION

(30) Priorité: 23.04.2015 FR 1553635
(43) Date de publication de la demande: 26.10.2016
(73) Titulaire: COLAS, 75015 Paris (FR)
(72) Inventeur: DEUDON, Guillaume, 59113 SECLIN (FR)
(74) Mandataire: Jacobacci Coralis Harle

(56) Documents cités:
- EP-A1- 0 198 097
- EP-A1- 0 911 304
- EP-A1- 1 466 878
- RÓBERT GÉBER ET AL: "Characterization of Mineral Materials as Asphalt Fillers", MATERIALS SCIENCE FORUM, vol. 659, 1 septembre 2010 (2010-09-01), pages 471-476, XP055244691, DOI: 10.4028/www.scientific.net/MSF.659.471
- Smith College: "Petrographic Data File: Sanidine", , 8 juillet 2013 (2013-07-08), XP002753431, Extrait de l'Internet: URL:http://www.science.smith.edu/geoscienc es/petrology/petrography/sanidine/sanidine .html [extrait le 2016-01-26]
- Smith College: "Petrographic Data File: Plagioclase", , 8 juillet 2013 (2013-07-08), XP002753432, Extrait de l'Internet: URL:http://www.science.smith.edu/geoscienc es/petrology/petrography/plagioclase/plagi oclase.html [extrait le 2016-01-26]
- Gemstone: "Labadorite Gemstone Information", , 9 December 2014 (2014-12-09), Retrieved from the Internet: URL:http://www.gemselect.com/gem-info/labr adorite/labradorite-info.php [retrieved on 2017-02-03]

## Description

### Domaine de l'invention

La présente invention se rapporte au domaine des revêtements routiers, tels que des routes, des pistes cyclables, des voies piétonnières, etc... ou d'éléments de sécurité et/ou de signalisation connexes aux voies de circulation, telles que glissières de sécurité en béton, bordures de trottoirs, bornes de signalisation, etc. possédant des propriétés optiques renforcées, telles que des propriétés réfléchissantes et un effet Schiller.

Elle concerne plus particulièrement une composition pour revêtements de voies de circulation ou pour éléments de sécurité et/ou de signalisation connexes permettant d'obtenir de telles propriétés.

Elle concerne encore les revêtements de voies de circulation et les éléments de sécurité et/ou de signalisation connexes obtenus à partir de cette composition.

### État de la technique

La sécurité, en particulier la sécurité routière, est une donnée fondamentale et pour attirer l'attention d'un usager, qu'il soit automobiliste, cycliste ou piéton, sur d'éventuels dangers ou tout simplement pour le guider, on doit mettre en évidence certaines voies ou parties de voies de circulation ou encore des éléments balisant ou protégeant des zones spécifiques.

Pour la différenciation des voies de circulation, on exploite en général les différentes couleurs pouvant être obtenues selon les types de revêtement (bitume, béton, etc.) ou encore la possibilité d'éclaircir le revêtement par l'emploi d'agrégat particulier, notamment des gravillons clairs.

Dans le domaine de la signalisation en particulier de la signalisation routière, on connaît des peintures ou bandes de marquages réfléchissantes contenant des microbilles de verres.

On a également proposé d'incorporer des billes de verres dans les revêtements pour chaussées.

Ces microbilles doivent présenter des caractéristiques spécifiques notamment de réflexion de la lumière et doivent avoir par exemple une forme définie pour obtenir un renvoi satisfaisant de la lumière telle que celle provenant de phares automobiles.

Ces microbilles doivent ainsi être fabriquées selon des procédés spécifiques onéreux, ce qui limite leurs applications notamment à des surfaces réduites.

On a également proposé d'utiliser des verres de récupération du type bouteilles (bris de verre) pour l'élaboration de revêtements de chaussées par incorporation en surface à l'aide de rouleaux compresseurs, après l'élaboration proprement dite du revêtement lorsqu'il est encore souple.

Les bris de verres ainsi appliqués ne permettent cependant pas d'atteindre des propriétés réfléchissantes satisfaisantes en particulier dans des sites très peu éclairés. De plus, ils risquent fortement d'être brisés par le trafic et rejetés en des lieux où ils ne pourront plus produire l'effet de réflexion.

Une autre solution connue afin d'améliorer la visibilité d'une voirie consiste à rendre les revêtements de chaussée réfléchissants par l'incorporation d'éclats de miroir essentiellement réfléchissant. Le document FR 2770213 décrit par exemple un matériau de revêtement routier pouvant comprendre de 10 à 80% en poids de débris de verres, lesquels contiennent au moins 10% en poids d'éclats de miroir, de dimension inférieure à 20 mm.

Cependant, cette solution présente l'inconvénient d'être relativement onéreuse.

On connait également de l'art antérieur la publication de Robert Géber et al. « Characterization of minerai materials as asphalt fillers », Materials science forum, vol. 659, 1 septembre 2010, page 471-476, dans laquelle six fillers présents en Hongrie ont été testés afin de vérifier leurs propriétés en tant que granulat pour revêtement routier et leur influence sur le bitume.

Le document EP 0 198 097 décrit un procédé pour la production de revêtements bitumineux structurés et/ou de couleur pour les routes et les chemins, les aires de stationnement, des zones de faible trafic, des aires de jeux, etc.

Bien que les compositions pour revêtements routiers selon l'art antérieur soient satisfaisantes, il existe toujours un besoin et une demande pour de nouvelles formulations pour revêtement routiers et/ou des éléments de sécurité et/ou de signalisation connexes aux voies de circulation ayant des propriétés à la fois esthétique et sécuritaire améliorées, tout en étant facile à mettre en oeuvre et peu onéreuses.

Le but de la présente invention est ainsi de proposer une nouvelle composition pour revêtement routiers (tels qu'une couche de roulement) et/ou des éléments de sécurité et/ou de signalisation connexes aux voies de circulation qui évite au moins en partie les inconvénients susmentionnés.

### Résumé de l'invention

À cet effet, la présente invention a pour objet une composition pour revêtement de voies de circulation ou éléments de sécurité et/ou de signalisation connexes telle que définie dans le jeu de revendications et comprenant au moins, en masse par rapport à la masse totale de ladite composition : de 4 à 6 % d'un liant hydrocarboné et de 94 à 96% d'un mélange granulaire, ledit mélange granulaire comprenant, en masse par rapport à sa masse totale :
de 0 à 4 % de fillers ;;
de 15 à 40% de sables ;
de 10 à 45% de gravillons,
de 0 à 10% de débris de verre réfléchissant, et
caractérisée en ce qu'elle comprend de 20 à 40% d'un matériau minéral comprenant un ou plusieurs feldspaths aptes à réfléchir la lumière ayant des distances d'inter-couches de 50 à 100 nm et présentant un coefficient de Los Angeles (LA) mesuré, selon la norme NF EN 1097-2, inférieur ou égal à 30, un coefficient micro-DEVAL (MDE) mesuré selon la norme NF EN 1097-1 inférieur ou égal à 25, la somme LA + MDE ≤ 45 et un coefficient de polissage mesuré selon la norme NF EN 1097-8 supérieur à 44. Selon l'invention, un feldspath est un minéral à base de silicate double, d'aluminium, de potassium, de sodium ou de calcium. Les feldspaths selon l'invention sont de la famille des tectosilicates.

Dans le cadre de l'invention, par matériau minéral apte à induire un effet « d'adularescence » ou « d'effet Schiller » (ou encore connue sous le nom de péristérescence), on entend un matériau appartenant à la famille des feldspaths capable d'induire un phénomène optique de goniochromisme dû à des interférences aux interfaces des couches internes (minces et alternés disposées en feuillet) du feldspath provoquant la réflexion et l'éparpillement de la lumière sur celles-ci. Ce phénomène de goniochromisme forme un miroitement sous la surface du matériau. On parle en effet de goniochromisme quand une surface paraît changer de couleur selon l'angle sous lequel on la regarde ou selon l'angle selon lequel elle est éclairée. Lorsque les couleurs sont celles de l'arc-en-ciel, il s'agit de l'irisation.

Ainsi, en fonction de la structure du feldspath et de l'angle de vue, l'utilisateur va percevoir une couleur en réflexion, généralement de couleur vert-bleue qui est le résultat du phénomène de goniochromisme/d'irisation optique. Comme on le verra ci-dessous (tableaux 1 et 2), l'effet est particulièrement marqué dans les matériaux présentant l'appellation commerciale « pierre de lune » (variété d'orthose) ou « pierre de soleil » ou dans la labradorite (variété d'anorthite). La couleur observée est dit pseudochromatique « apparemment colorée ». Cet effet est par conséquent aisément mesurable par un observateur.

Par feldspaths aptes à réfléchir la lumière, on entend un matériau présentant également des propriétés réfléchissantes par opposition à des matériaux ordinaires, comme des verres ordinaires, qui sont transparents ou translucides et pour lesquels les propriétés de réflexion ne sont pas primordiales.

Ainsi, les propriétés réfléchissantes considérées selon l'invention concernent la réflexion de la lumière du domaine du visible, notamment la lumière d'éclairage (notamment éclairage urbain, éclairage de tunnels...), la lumière de véhicules (phares...) ou la lumière naturelle.

L'invention a également trait à un revêtement routier comprenant la composition susmentionnée et telle que définie dans le jeu de revendications.

Pour le reste de la description, à moins qu'il n'en soit spécifié autrement, l'indication d'un intervalle de valeurs « de X à Y » ou « entre X et Y », dans la présente invention, s'entend comme incluant les valeurs X et Y.

### Description du dessin :

L'invention sera mieux comprise et d'autres buts, détails, caractéristiques et avantages de celle-ci apparaîtront plus clairement à la lecture de la description suivante d'exemples de réalisation, en référence à la figure annexée dans laquelle :

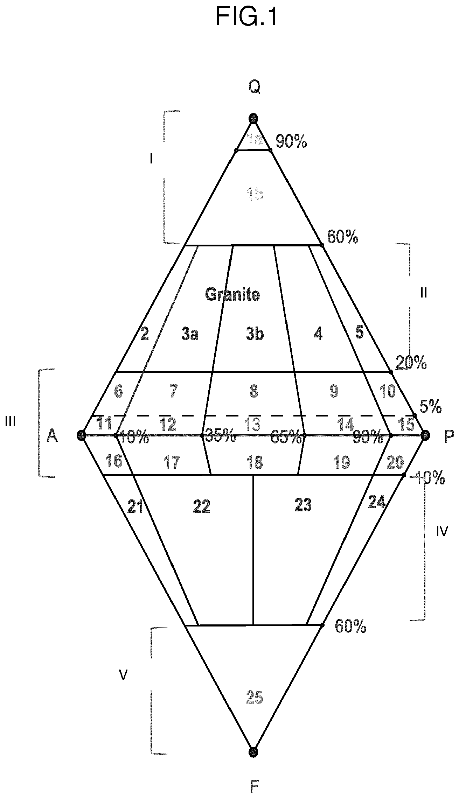

- la figure 1 est un diagramme QAFP (Quartz, Feldspath alcalin, Plagioclase, Felspathoïde) selon la norme NF EN 12670 qui classe la division plutonique des roches ignées en fonction de leur composition minéralogique ; en particulier dans ce diagramme les références suivantes sont utilisées :

| **Groupe** | **Division plutonique** |
|---|---|
| I : roches quarzitiques | 1a : quarzolite |
| | 1b : granitoïde hyperquartzeux |
| II: roches quartzo-feldspathiques | 2: granite à feldspath alcalin |
| | 3a: syénogranite |
| | 3b: monzogranite |
| | 4: granodiorite |
| | 5: tonalite |
| III: roches feldspathiques | 6: syénite alcaline quarzifère |
| | 7: syénite quarzifère |
| | 8: monzonite quarzifère |
| | 9: monzodiorite et monzogabro quarzifères |
| | 10: diorite et gabbro quarzifères |
| | 11: syénite alcaline |
| | 12: syénite |
| | 13: monzonite |
| | 14: monzodiorite et monzogabbro |
| | 15: diorite et gabbro |
| | 16: syénite alcaline foïdifère |
| | 17: syénite foïdifère |
| | 18: monzonite foïdifère |
| | 19: monzodiorite et monzogabro foïdifères |
| | 20: diorite et gabbro foïdifères |
| IV: roches foïdo-feldspathiques | 21: syénite feldspathoïdique (foyaïte) |
| | 22: monzosyénite feldspathoïdique (plagiofoyaïte) |
| | 23: monzodiorite et monzogabbro foïdique (essexite) |
| | 24: diorite et gabbro foïdique (théralite) |
| V: roches foïdiques | 25: feldspathoïdite (foïdite - foïdolite) |

### Description détaillée de l'invention

La société Demanderesse s'est attachée au développement de nouvelles compositions pour revêtement de voies de circulation ou éléments de sécurité et/ou de signalisation connexes adaptées aux exigences des professionnels de la route, à savoir permettant d'améliorer la lisibilité et la visibilité des voies de circulation.

A cet effet, la présente invention porte sur une composition pour revêtement de voies de circulation ou éléments de sécurité et/ou de signalisation connexes comprenant au moins en masse par rapport à la masse totale de ladite composition : de 4 à 6 % d'un liant hydrocarboné et de 94 à 96% d'un mélange granulaire comprenant, en masse par rapport à sa masse totale :
de 0 à 4% de fillers ;
de 15 à 45%, et en particulier de 15 à 35% de sables ;
de 10 à 45%, et en particulier de 15 à 35% de gravillons,
de 0 à 10% de débris de verre réfléchissant, et
caractérisée en ce qu'elle comprend de 20 à 40% d'un matériau minéral comprenant un ou plusieurs feldspaths (également appelé par la suite « matériau minéral feldspathique ») aptes à réfléchir la lumière ayant des distances d'inter-couches de 50 à 100 nm et présentant un coefficient de Los Angeles (LA) mesuré, selon la norme NF EN 1097-2, inférieur ou égal à 30, un coefficient micro-DEVAL (MDE) mesuré selon la norme NF EN 1097-1 inférieur ou égal à 25, la somme LA + MDE ≤ 45 et un coefficient de polissage mesuré selon la norme NF EN 1097-8 supérieur à 44.

De par ses caractéristiques, la composition selon la présente invention présente des propriétés photométriques renforcées permettant ainsi d'améliorer la visibilité des revêtements de voies de circulation et/ou de signalisation connexes et donc d'assurer à la fois un rôle esthétique et sécuritaire.

De plus et comme cela sera démontré dans les essais expérimentaux ci-dessous, la composition selon l'invention présente de préférence une grande durabilité, des résistances mécaniques élevées tout en étant économique (matières premières peu onéreuses) et simple à mettre en oeuvre.

Telle que mentionnée ci-dessus, la composition selon l'invention comprend un mélange granulaire composé d'au moins un matériau minéral spécifique apte, à la fois, à réfléchir la lumière et à induire un effet Schiller d'adularescence.

Généralement, ledit matériau minéral comprenant un ou plusieurs feldspaths, présente de préférence une biréfringence allant de 0,004 à 0,012, de préférence de 0,005 à 0,013 et idéalement de 0,005 à 0,009.

Selon l'invention, les lamelles du ou des feldspaths composant le matériau minéral présentent des distances d'inter-couches de l'ordre de 50 à 100 nm, de préférence de 60 à 90 nm, pouvant ainsi induire des phénomènes optiques de type effet Schiller d'adularescence /iridescence.

En particulier, le ou les feldspaths selon l'invention peuvent être choisis parmi les espèces minérales du groupe des silicates, sous-groupe des tectosilicates.

Le matériau minéral peut comprendre en particulier un feldspath alcalin, tel qu'un feldspath potassique ou sodique, un feldspath plagioclase (feldspath sodocalcique) ou un de leurs mélanges.

Ainsi, selon un mode de réalisation, le matériau minéral selon l'invention peut comprendre des feldspaths alcalin de formule générale suivante : K ou Na Al Si₃O₈ avec des traces de : Fe, Ca, Na, H₂O.

En particulier, le feldspath alcalin peut être choisi parmi l'espèce minérale suivante : l'albite, l'anorthose, la sanidine, l'orthose, le microcline ou un de leurs mélanges.

Le tableau 1 ci-dessous répertorie des feldspaths potassiques ou sodiques convenant pour la présente invention et aptes à montrer un effet Schiller d'adularescence :

**Tableau 1**

| **Feldspaths potassiques ou alcalins** | | |
|---|---|---|
| Nom | Formule | Densité |
| Albite | NaAlSi₃O₈ | 2,57 à 2,68 |
| - Pierre de lune | | |
| Anorthose ou anorthoclase | - | 2,55 à 2,63 |
| - Pierre de lune | | |
| Sanidine | (K, Na) AlSi₃O₈ | 2,55 à 2,63 |
| - Pierre de lune | | |
| Orthose | KAlSi₃O₈ | 2,55 à 2,60 |
| - Pierre de lune | | |
| - Pierre de soleil | | |
| Microcline | KAlSi₃O₈ | 2,54 à 2,64 |
| - amazonite | | |

L'albite est un feldspath commun très riche en sodium (+90% en poids), pivot de deux séries distinctes : elle est d'une part le pôle extrême de la série des feldspaths potassiques albite-orthose et d'autre part le pôle extrême de la série des plagioclases albite-anorthite. L'albite devient anorthose dès que sa teneur en potassium est supérieure à 10%, en remplacement du sodium. De l'autre côté, elle devient oligoclase dès que sa teneur en calcium est supérieure à 10%, toujours en remplacement du sodium.

Les paramètres de la maille de l'albite sont les suivants : a = 8.144, b = 12.787, c = 7.16, Z = 4; alpha = 94.266°, beta = 116.583°, gamma = 87.667° V = 664.40 Å.

L'orthose est un feldspath potassique. Sa composition chimique est KAISi₃O₈ avec des traces de Na;Fe;Ba;Rb;Ca.

Il en existe plusieurs variétés :
- adulaire ou pierre de lune : si les couches sont suffisamment fines, elles donnent une couleur pseudochromatique « apparemment colorée » de couleur bleue, ou sinon une couleur blanche. Elle provient de Sri Lanka (transparente avec des reflets bleus), de Birmanie, mais aussi d'Australie, des États-Unis d'Amérique, d'Inde (gris, rose, blanc laiteux), de Madagascar, de Tanzanie et même des Alpes suisses où elle a été initialement découverte ;
- aglaurite : autre variété présentant des phénomènes d'adularescence bleue ;
- delawarite : une variété d'orthose à reflet perlé.

Les paramètres de la maille conventionnelle de l'orthose sont les suivants: a = 8.625, b = 12.996, c = 7.193, Z = 4; beta = 116.016° V = 724.57 Å.

L'anorthose est un feldspath alcalin intermédiaire dans la série albite-orthose, se situant entre l'albite et la sanidine, avec une teneur en sodium supérieure à 65%. Elle montre également un effet Schiller d'adularescence.

A titre d'exemple, les matériaux/roches comprenant de l'anorthose perthitique produisant des reflets gris à bleutés conviennent pour la présent invention. Ils peuvent être commercialisés sous le nom commercial de « Irina Bleu » (Urkraine) ou « d'Emerald Pearl » (Norvège).

Selon un mode préféré de l'invention, le matériau minéral comprend un feldspath alcalin de type anorthose.

La sanidine est un feldspath potassique qui membre de la série Albite-Orthose dont K>Na.

Il existe également plusieurs variétés de sanidine dont l'azulicite qui est une variété qui présente une forte iridescence.

Les paramètres de la maille conventionnelle de la sanidine sont les suivants :a = 8,562 Å, b = 12,996 Å, c = 7,193 Å, Z = 4; beta = 116,016 V = 719,28 Å.

Le microcline est une espèce minérale du groupe des silicates sous-groupe des tectosilicates de formule idéale KAlSi₃O₈, avec présence des éléments ou composés mineurs ou en trace suivants : Fe, Ca, Na, Li, Cs, Rb et H₂O. Il s'agit d'un polymorphe de l'orthose. La variété la plus connue est l'Amazonite (tons prédominants de vert, vert-bleu ou bleu-vert).

Les paramètres de la maille conventionnelle du microcline sont les suivants : a = 8,577 Å, b = 12,967 Å, c = 7,223 Å, α = 90,65°, β = 115,933°, γ = 87,783° ; Z = 4, V = 721,85 Å.

Selon un autre mode de réalisation, le matériau minéral selon l'invention peut comprendre des feldspaths plagioclase de formule générale suivante (Na,Ca)[Si₂Al(Si,Al)O₈] pouvant contenir notamment des traces de potassium et d'eau.

En particulier, le feldspath plagioclase peut être choisi parmi l'espèce minérale suivante : l'albite (peristérite), l'oliglase, l'andésine, la bytownite, l'anorthite, telle que la labradorite ou un de leurs mélanges. Le feldspath plagioclase est de préférence la labradorite, l'orthose adulaire, l'orthose aglaurite ou l'oligoclase.

Le tableau 2 ci-dessous répertorie des feldspaths plagioclases convenant pour la présente invention et apte à montrer un effet d'adularescence :

**Tableau 2**

| **Feldspaths calciques ou plagioclases (classification de Streckeisen)** | | | |
|---|---|---|---|
| Nom | % NaAlSi₃O₈ | % CaAl₂Si₂O₈ | Densité (g/cm³) |
| albite | 100-90 | 0-10 | 2,57 à 2,68 |
| - Pierre de lune | | | |
| oligoclase | 90-70 | 10-30 | 2,62 à 2,68 |
| - Pierre de lune | | | |
| - Pierre de soleil | | | |
| andesine | 70-50 | 30-50 | 2,65 à 2,69 |
| - Pierre de soleil | | | |
| labradorite | 50-30 | 50-70 | 2,67 à 2,73 |
| - Pierre de soleil | | | |
| bytownite | 30-10 | 70-90 | 2,69 à 2,75 |
| anorthite | 10-0 | 90-100 | 2,73 à 2,78 |

L'oligoclase est un membre intermédiaire de la série albite-anorthite pour un ratio de 90/10 ou 70/30. Elle contient 70 à 90% de sodium et 10 à 30% de calcium.

Il existe plusieurs variétés d'oligoclase comme :
- lazur-feldspath qui est une variété bleue d'oligoclase ;
- héliolite qui est une variété d'oligoclase, de couleur orange -brun présentant l'effet Schiller d'adularescence et contenant de petits cristaux d'hématite qui lui donnent un éclat particulier. Les gisements les plus courants sont aux USA, en Australie, aux Indes et en Norvège.

Les paramètres de la maille conventionnelle de l'oligoclase sont les suivants : a = 8.15 Å, b = 12.78 Å, c = 8.5 Å, Z = 5; alpha = 94.016°, bêta = 116.3333°, gamma = 88.667° V = 791.30 Å.

L'andésine est un membre intermédiaire de la série isomorphe albite-anorthite pour un ratio de 50/50 ou 70/30.

Les paramètres de la maille conventionnelle de l'andésine sont les suivants :a = 8.144 Å, b = 12.787 Å, c = 7.16 Å, Z = 4; alpha = 94.266°, beta = 116.583°, gamma = 87.667° V = 664.40.

La labradorite, est une variété d'anorthite pour un ratio albite/anorthite de 30/70 à 50/50 contenant, en poids, de 50 à 70% de calcium et de 30 à 50% de sodium. La formule chimique est (Na, Ca)(Al, Si)4O8, avec des traces de Fe;K;H2O.

Sa particularité est de posséder un jeu de couleurs à l'éclat métallique. Le bleu et le vert sont les couleurs les plus souvent présentes. Le phénomène est le résultat d'interférences dans des lamelles jumelées. En particulier, ce phénomène d'optique (réflexion bleutée) est causé par les intercroissances de Boggild qui se produisent entre An47 et An58. La « Labrador Antique Granite » issue d'une mine au Canada ou en Norvège convient pour réaliser l'invention.

Les paramètres de la maille conventionnelle de la labradorite sont les suivants : a = 8.155 Å, b = 12.84 Å, c = 10.16 Å, Z = 6; alpha = 93.5°, beta = 116.25°, gamma = 89.133° V = 952.25.

La Bytownite est un feldspath plagioclase contenant 70 à 90% de calcium et 10 à 30% de sodium. Elle est un membre intermédiaire de la série isomorphe albite-anorthite.

Ses paramètres de la maille conventionnelle sont les suivants : a = 8,177 Å, b = 12,87 Å 7, c = 14,169 Å, Z = 8 ; alpha = 93,166 °, bêta = 115,85°, gamma = 91,216° V = 1 340,29 Å.

L'Anorthite est un feldspath plagioclase contenant plus de 90% de calcium et moins de 10% de sodium, pôle extrême de la série isomorphe Albite-Anorthite.

Ses paramètres de la maille conventionnelle sont les suivants : a = 8,177 Å, b = 12,87 Å 7, c = 14,169 Å, Z = 8; alpha = 93,166 °, bêta = 115,85 °, gamma = 91,216° V = 1 340,29 Å.

De manière préférée, le matériau minéral selon l'invention comprenant des feldspaths du type : albite, anorthose, sanidine, orthose, oligoclase, andésine et labrodorite ou un de leurs mélanges sont préférés.

En particulier, le matériau minéral selon l'invention comprend avantageusement un feldspath du type labrodorite ou anorthose ou un de leurs mélanges.

En général, le matériau minéral convenant pour l'invention peut être une roche, telle qu'une roche ignée et notamment une roche ignée plutonique comprenant, au poids, par rapport à son poids total, au moins 70% de feldspaths, de préférence au moins 80% et typiquement au moins 90% de feldspaths.

Dans le cadre de la présente invention, un matériau minéral comprenant en poids au moins 70% de feldspaths, on entend un matériau minéral comprenant : 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, 99,5%, 99,9 % de feldspaths, en poids, par rapport à son poids total.

Selon l'invention, les lamelles du ou des feldspaths composant la roche présentent des distances d'inter-couches de l'ordre de 50 à 100 nm, de préférence de 60 à 90 nm, pouvant ainsi induire des phénomènes optiques de type effet Schiller d'adularescence /iridescence.

À titre d'exemple, la roche peut correspondre à une roche ignée et en particulier une roche plutonique telle qu'illustrée en figure 1.

Parmi la roche ignée plutonique, on retrouve par exemple selon la classification QAFP:
- les diorites et gabbro 10, 15, 20, 24 (anorthosite, euphrodite à Smaragdite ou vert d'Orezza, Corse ; anorthosite de type labrador ; norite (impala blue) Afrique du Sud ; péridotite ; picrite, et
- les syénites 6, 7 11, 12, 16, 17, 21 (syénites mélanocrates ; shonkinite ; monzonite; syénite à sodalite du Groenland). Les syénites sont composées de feldspath alcalin et de plagioclase, ainsi que de quartz en très faible proportion (voire pas du tout).

De préférence, la roche ignée plutonique selon l'invention est une roche syénite et/ou une roche gabbros (anorthosite par exemple de type Labrador) comprenant en particulier, au poids, par rapport à son poids total, au moins 70% de feldspaths. Typiquement, la roche ignée plutonique selon l'invention est une roche syénite.

En particulier, le matériau minéral feldspathique est une roche syénite choisie parmi une syénite alcaline 6, syénite (sensu stricto) 12, monzonite 13 ou une de leurs combinaisons, et la roche gabbros peut être choisi parmi une anorthosite de type Labrador.

Préférentiellement, le matériau minéral feldspathique selon l'invention est une syénite, grenue, mélanocrate présentant des lamelles différenciées de feldspaths alcalins et de plagioclases issues d'un phénomène d'exsolution. Une telle roche peut par exemple se trouver dans les pays Scandinaves.

Selon l'invention, le mélange granulaire comprend, en masse, par rapport à sa masse totale de 20 à 40% dudit matériau minéral comprenant un ou plusieurs feldspaths.

Dans le cadre de la présente invention, un mélange granulaire comprenant, en masse, par rapport à sa masse totale de 20% à 40% dudit matériau minéral, on entend un mélange granulaire comprenant : 20%, 21%, 22%, 23%, 24%, 25%,26%, 27%, 28%, 29%, 30%, 31%, 32%, 33%, 34%, 35%, 36%, 37%, 38%, 39%, 40%dudit matériau minéral feldspathique.

De préférence, ledit matériau minéral comprenant des feldspaths présente une distribution granulométrique choisie parmi 0/D, avec D compris entre 2 et 6.3 mm, et/ou parmi d/D' par exemple : 1/3, 2/4, 2/6, 5/8, 4/6, 6/10, 8/11, 10/14. D' pouvant aller jusqu'à 31,5mm, ou un de leurs mélanges.

De préférence, le matériau minéral feldspathique selon l'invention présente une distribution granulométrique allant de 2 à 31,5 mm, de préférence de 2 à 14 mm, telle que de 6 à 14 mm ;

Au sens de l'invention, une gamme allant de 2 à 31,5 mm inclut les valeurs suivantes et tout intervalle compris entre ces valeurs : 2,3 ; 4 5 ; 6 ; 7 ; 8 ; 9 ; 10 ; 11 ; 12 ; 13 ; 14 ; 15 ; 16 ; 17 ; 18 ; 19 ; 20 ; 21 ; 22 ; 23 ; 24 ; 25 ; 26 ; 27 ; 28 ; 29 ; 30 ; 31 et 31,5 mm.

Telle que défini ici, la dimension d'une particule, et plus généralement d'un constituant d'un mélange granulaire, correspond à son diamètre si ce constituant est de forme sphérique. Si le constituant n'a pas une forme sphérique, sa dimension correspond à la longueur de son axe primaire, c'est-à-dire la plus longue ligne droite qui peut être dessinée entre une extrémité de ce constituant et une extrémité opposée.

Selon l'invention, le matériau minéral feldspathique présente un coefficient de Los Angeles (LA) mesurée, selon la norme NF EN 1097-2, inférieur ou égal à 30 et un coefficient micro-DEVAL (MDE) selon la NF EN 1097-1 inférieur ou égal à 25 et la somme LA + MDE ≤ 45.

Dans le cadre de la présente invention, un coefficient de Los Angeles (LA) inférieur ou égal à 30 inclut les valeurs suivantes ou tous intervalles entre ces valeurs : 30 ; 29 ; 28 ; 27 ; 26 ; 25 ; 24 ; 23 ; 22 ; 21 ; 20 ; 19 ; 18 ; 17; 16 ; 15 ; 14 ; 13 ; 12 ; 11 ; 10 ; 9 ; 8 ;7 ; 6 ; 5 ; 4 ; 3 ; 2 voire 1. De même, selon l'invention, un coefficient micro-DEVAL (MDE) selon la NF EN 1097-1 inférieur ou égal à 25 inclut les valeurs suivantes ou tous intervalles entre ces valeurs : 25 ; 24 ; 23 ; 22 ; 21 ; 20 ; 19 ; 18 ; 17 ; 16 ; 15 ; 14 ; 13 ; 12 ; 11 ; 10; 9; 8 ; 7 ; 6 ; 5 ; 4 ; 3; 2 voire 1. Enfin, ci-après la somme LA + MDE ≤ 45 inclut les valeurs suivantes ou tous intervalles entre ces valeurs : 45, 44, 43, 42, 41, 40, 39, 38, 37, 36, 35, 34, 33, 32, 31 30 ; 29 ; 28 ; 27 ; 26 ; 25 ; 24 ; 23 ; 22 ; 21 ; 20 ; 19 ; 18 ; 17 ; 16 ; 15 ; 14 ; 13 ; 12 ; 11 ; 10 ; 9 ; 8 ; 7 ; 6 ; 5 ; 4 ; 3 ; 2voire 1.

Selon l'invention, ce matériau minéral feldspathique présente également un coefficient de polissage PSV > 44 mesuré selon la norme NF EN 1097-8.

Dans le cadre de la présente invention, un coefficient de polissage PSV > 44 inclut les valeurs suivantes ou tous intervalles entre ces valeurs : 45 ; 46 ; 47 ; 48 ; 49 ; 50 ; 51 ; 52 ; 53 ; 54 ; 55 ; 56 ; 57 ; 58 ; 59 ; 60 ; 61 ; 62 ; 63 ; 64 ; 65 ; 66 ; 67 ; 68 ; 69 ; 70 ; 71 ; 72 ; 73 ; 74 ; 75 ; 76 ; 77 ; 78 ; 79 voire 80 et suivants..

Le matériau minéral feldspathique selon l'invention présente l'avantage, notamment par rapport aux éclats de miroirs utilisés dans l'art antérieur de permettre, d'une part la réflexion de la lumière de manière très satisfaisante, et d'autre part, des phénomènes de réfraction et d'interférences optiques, qui se traduisent par l'apparition d'un effet Schiller (iridescence et d'adularescence) et d'une couleur structurelle qui est généralement bleue. En outre, toutes les faces du matériau minéral comprenant des feldspaths selon l'invention sont optiquement actives, ce qui n'est pas le cas des éclats de miroir.

En effet, le matériau minéral feldspathique selon l'invention est apte à engendrer une couleur de réflexion de préférence bleutée/vert lorsqu'elle est soumise à de la lumière visible (de 400 à 800 nm). Telle qu'indiquée ci-dessus, la couleur observée (par l'oeil humain) peut être provoquée notamment par des diffractions intervenant lors du passage de la lumière incidente dans les lamelles des feldspaths spécifiques pouvant composer tout ou partie du matériau minéral feldspathique selon l'invention.

Enfin, le matériau minéral feldspathique selon l'invention est moins onéreux que les éclats de miroirs et présente ainsi un intérêt économique.

Le mélange granulaire selon l'invention peut comprendre en outre d'autres matériaux granulaires utilisés dans le domaine des revêtements routiers, tels que des éclats de miroir et ce afin de renforcer le phénomène de réflexion de la lumière.

Selon l'invention, le mélange granulaire peut comprendre, en masse, par rapport à sa masse totale moins de 10% (borne non incluse) de débris de verre réfléchissant, tels que des débris miroirs, de préférence de 6 à 10% en masse.

Selon l'invention, par « débris de verre essentiellement réfléchissants », on entend des débris de verre spéciaux présentant essentiellement des propriétés réfléchissantes par opposition aux débris de verre ordinaires qui sont transparents ou translucides et pour lesquels les propriétés de réflexion ne sont pas primordiales. Par exemple, un débris de verre essentiellement réfléchissants selon l'invention peut présenter un facteur de transmission lumineuse TL qui est ≤ 67 % (qui correspond à la proportion de la lumière visible, pour une incidence normale, qui est transmise à travers le débris) et un facteur de réflexion lumineuse (RL) qui est ≥ 20 % (correspond à a proportion de la lumière visible, pour une incidence normale, qui est réfléchie par le verre).

Les débris de verres spéciaux pouvant être mis en oeuvre selon l'invention sont en général issus de verres qui ont subi un traitement, par exemple un traitement de métallisation, pour exalter leurs propriétés réfléchissantes.

Parmi les verres utilisables selon l'invention, on peut citer les miroirs classiques, les verres métallisés et les verres émaillés.

Les verres présentant au moins une surface métallisée, notamment les verres pour le bâtiment tel que le verre Antélio®, peuvent également être utilisables selon l'invention, de même que les verres à inclusions métalliques comme ceux des lunettes arrières de véhicules munis d'un filament métallique pour dégivrage.

En variante, on peut envisager l'utilisation de verres cérames ou flammés, ou de verres pour automobiles tels que les verres colorés "anti-éblouissement" pour vitrage, ou les verres de sécurité de type Sécurit®

Les verres utilisés selon l'invention peuvent provenir de déchets de fabrication ou encore de la récupération des matières à partir de véhicules, de la démolition de bâtiments, etc.

Lorsque le terme verre est utilisé seul, il désigne tout type de verres en mélange, c'est-à-dire des mélanges de verres spéciaux ou des mélanges de verres ordinaires de type bouteille ou vitre avec des verres spéciaux, ou encore des verres d'écrans informatiques.

On peut aussi utiliser d'autres types de verres, notamment des verres d'écrans informatiques, en mélange avec des verres spéciaux

Les verres, neufs ou de rebut, sont brisés et concassés par tout moyen connu jusqu'à obtenir des débris de dimension de préférence inférieure à 20 mm, de préférence de dimension allant de 2 à 10 mm et plus préférentiellement encore de 2 à 6 mm.

Selon l'invention, la composition peut contenir des mélanges de débris de verre ordinaires, c'est-à-dire non réfléchissant.

Également, le mélange granulaire selon l'invention comprend d'autres matériaux habituellement utilisés dans le domaine des revêtements routiers, tels que des agrégats minéraux naturels « classiques » et peut comprendre des agrégats d'enrobés (AE).

Par agrégats minéraux naturels classiques, on entend des granulats non issus de matériaux recyclés (à savoir d'agrégats d'enrobé (AE) ou de bardeaux d'asphalte) et qui sont différents du matériau minéral comprenant au moins un feldspath tel que décrit ci-dessus.

Le terme « agrégats d'enrobés » désigne un granulat provenant de produits de démolition (comme des enrobés d'anciennes chaussées qui ont été concassés et/ou fraisés).

En général, les agrégats naturels « classiques » peuvent être, sans limitation, des gravillons/graviers, des fillers, des sables, des sablons (sables à grains très fins), des poussières ou un de leurs mélanges. Les granulats utilisés peuvent être des granulats routiers, répondant aux normes : NF EN 13043 en Europe et ASTM C33 en Amérique du Nord.

Les fillers, également appelés fines, correspondent à une poudre minérale présentant généralement une granulométrie inférieure à 63 µm, tandis que les sables/sablons correspondent généralement à toute roche à l'état de petits grains non liés présentant une dimension allant jusqu'à 5 mm.. Ces granulats ont en général une masse volumique réelle mesurée selon la norme NF EN 1097-6 supérieure à 2000 kg/m³ et même supérieure à 2500 kg/m³ et une densité relative en vrac mesurée selon la norme NF EN 1097-3 comprise entre 1,2 à 1,7.

Selon l'invention, le mélange granulaire comprend, en masse, par rapport à sa masse totale de 15 à 45%, en particulier de 15 à 35% et idéalement de 20 à 32% de sables/sablons (0/2mm).

Il comprend également en masse, par rapport à sa masse totale de 10 à 45% et idéalement de 15 à 35% de gravillons/graviers (0/10 mm).

Selon une autre caractéristique de l'invention, la composition d'enrobé comprend en outre des agrégats d'enrobés (AE).

Lorsqu'il est présent, l'agrégat d'enrobé AE représente, en poids, de 5 à 50 %, de préférence de 10 à 30 % par rapport au poids total du mélange granulaire selon l'invention (à savoir un matériau minéral feldspathique comprenant au moins un matériau minéral comprenant un ou plusieurs feldspaths et éventuellement des agrégats classiques).

Le mélange granulaire selon l'invention comprend, en masse, par rapport à sa masse totale :
- de 20 à 40% dudit matériau minéral comprenant un ou plusieurs feldspaths ;
- de 0 à 10%, de préférence de 6 à 10%, de débris de verre réfléchissant ;
- de 0 à 4% de fillers ;
- de 15 à 45%, idéalement de 30 à 35% de sables ;
- de 10 à 45%, idéalement de 15 à 35% de gravillons.

Selon l'invention, le mélange granulaire représente, en masse, par rapport à la masse totale de la composition pour revêtement de voies de circulation de 94 à 96%.

Le mélange granulaire selon l'invention répond notamment au marquage CE en vigueur dans le domaine de la construction et notamment aux normes (EN 13043, EN 12 260 et EN 13 242).

Le reste de la composition selon l'invention est de préférence complété par un liant hydrocarboné.

Selon l'invention, on entend par « liant hydrocarboné et/ou de synthèse», un composé susceptible de durcir et/ou de lier entre eux des matériaux granulaires.

Le liant hydrocarboné représente en masse par rapport à la masse totale de la composition moins de 4 à 6%.

En particulier, liant hydrocarboné peut être choisi parmi un liant bitumineux, un liant végétal, un liant organo-minéral, un liant géopolymère ou un de leurs mélanges. Ces liants sont connus de l'homme de l'art.

A titre d'exemple, le bitume est un mélange de matières hydrocarbonées naturelles issues de la fraction lourde obtenue lors de la distillation du pétrole, ou provenant de gisements naturels se présentant sous forme solide ou liquide, de densité généralement comprise entre 0,8 et 1,2. Il peut être préparé par toute technique conventionnelle.

Sont admis comme bitume au sens de l'invention les bitumes purs définis dans la norme NF EN 12591.

Le bitume peut également être un bitume modifié définis dans la norme NF EN 14023. Par exemple les bitumes sont modifiés par incorporation d'additifs de toute nature, tels que des additifs en vue d'améliorer les caractéristiques d'adhésivité, de tenue aux températures extrêmes (hautes et basses) ou la tenue mécanique sous trafic élevé ou agressif. On peut citer les bitumes améliorés par incorporation d'élastomères ou de plastomères synthétiques ou naturels de type poudre de caoutchouc (polybutadiène, caoutchouc styrène-butadiène ou SBR), SBS, EVA ou autres. Il est également possible d'utiliser des mélanges de bitumes de différents types.

De préférence, le liant hydrocarboné présente un grade de pénétrabilité à 25°C déterminé selon la norme EN 1426 de 10/20, 15/25, 20/30, 40/60, 35/50, 50/70, 70/100, 160/220 1/10e de mm ou un de leurs mélanges.

Il est connu de l'homme du métier que des bitumes de grades différents peuvent être mélangés sans aucune difficulté.

Sont également admis comme bitumes au sens de l'invention les liants d'origine végétale, tel que le Végécol®, commercialisé par la société Colas et décrit dans la demande de brevet FR 2 853 647, les liants de synthèse d'origine pétrolière tels que la gamme des liants Bituclair® commercialisée par la société Colas.

Par « organo-minéral », on entend selon l'invention un liant sous forme d'une dispersion en phase aqueuse d'un mélange de polymères organiques et inorganiques, du type Aqua-Rev® commercialisé par la société INMS Avec un tel liant, la cohésion est assurée par séchage à l'air libre.

Dans le cadre de la présente invention, on entend par «liant de géosynthèse », un liant géopolysynthétique résultant d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

La présente composition pourra être mise en oeuvre selon les techniques connues de l'homme du métier.

Par exemple, il pourra être préparé à chaud dans une centrale d'enrobage continue ou discontinue.

Le procédé peut présenter les étapes suivantes :
(i) le chauffage du liant hydrocarboné et/ou de synthèse à une température suffisante pour atteindre une viscosité de l'ordre de 200 m.Pa.s, afin d'obtenir un bon enrobage du mélange granulaire,
(ii) l'incorporation du mélange granulaire selon l'invention comprenant au moins le feldspath à effet Schiller ;
(iii) le malaxage du mélange obtenu à l'étape (ii), de sorte à obtenir une composition d'enrobé dans un malaxeur ou un tambour sécheur.

En particulier, l'étape (i) peut être réalisée aux températures indiquées dans le tableau 3 ci-dessous. Ce tableau décrit les températures d'enrobé à respecter en fonction du grade du liant selon la norme NF P 98-150-1.

**Tableau 3**

| **Catégorie du bitume pur** | **Température usuelle de fabrication (°C)** | **Température maximale (°C)** |
|---|---|---|
| 160/220 | 130-150 | 170 |
| 70/100-50/70 | 140-160 | 180 |
| 35/50 | 150-170 | 190 |
| 10/20-15/2520/30 | 160-180 | 190 |

De préférence, avant de procéder à l'étape (ii), les différentes fractions pouvant entrer dans la composition du mélange granulaire selon l'invention sont pré-dosées, séchées et/ou dépoussiérées, par exemple dans des sécheurs constitués d'un tube cylindrique tournant sur lui-même et équipé d'un brûleur au fuel ou au gaz apte à chauffer les fractions granulaires à des températures de l'ordre de 120 à 170°C, de préférence de 150 à 170°C.

La présente invention concerne également un revêtement routier comprenant la composition telle que décrite ci-dessus.

De préférence, le revêtement routier correspondra à une couche de roulement ou une couche de liaison, de préférence, le revêtement sera une couche de roulement.

À titre d'exemple, le revêtement correspondra en particulier à des revêtements de surfaces sensiblement horizontales telles que les voies de circulation, notamment les chaussées, les pistes cyclables, les trottoirs et autres allées piétonnières, ou encore les emplacements de stationnement.

Le revêtement selon l'invention est mis en oeuvre selon une méthode de réalisation connue de l'homme du métier.

Par exemple, le procédé de réalisation peut comprendre les étapes suivantes :
a) on prépare une composition d'enrobé bitumineux selon les étapes (i) à (iii) définies ci-dessus ;
b) on répand la composition d'enrobé bitumineux issu de l'étape a) ;
c) on compacte le mélange répandu, et
d) on laisse refroidir le mélange compacté.

Les exemples suivants, non limitatifs, illustrent la présente invention. Dans les exemples suivants, à moins qu'il ne soit indiqué une mesure différente, les valeurs sont exprimées en masse.

### Exemples

### 1. Procédures d'essai

Les procédures d'essais suivants ont été utilisées afin d'évaluer les caractéristiques du mortier-colle de l'invention :

### a) Essai de maniabilité selon la norme NF EN 12697-10 et NF EN 1267-31

Cet essai reflète la capacité de l'enrobé bitumineux à être mis en place avec une compacité spécifiée. Il permet ainsi d'étudier le comportement au compactage des enrobés hydrocarbonés

Protocole : un mélange hydrocarboné, préparé en laboratoire à la température d'essai (variable en fonction du grade du liant), est placé dans un moule cylindrique de 150 mm de diamètre.

On applique au moule incliné d'un angle de 1°, un mouvement de rotation tout en lui imposant une pression verticale de 0,6 MPa.

Ces contraintes permettent un compactage par pétrissage du mélange.

On observe l'augmentation de la compacité en fonction du nombre de girations.

Ceci permet pour un nombre de girations donné, de prévoir la compacité du mélange une fois mis en oeuvre.

L'essai PCG traduit la maniabilité de l'enrobé. En effet, plus la pente de la droite (compacité fonction du nombre de giration) est forte, plus le matériau est maniable.

### b) Essai de sensibilité à l'eau selon NF EN 12697-12 (essai Duriez : calcul du pourcentage de vide/compacité)

Principe essai Duriez : le mélange est compacté dans un moule cylindrique par une pression statique à double effet. Une partie des éprouvettes est conservée sans immersion à température (18°C) et hygrométrie contrôlées, l'autre partie est conservée immergée. Chaque groupe d'éprouvettes est écrasé en compression simple.

Interprétation essai Duriez : le rapport de la résistance après immersion à la résistance à sec donne la tenue à l'eau du mélange. La résistance à sec est une approche des caractéristiques mécaniques, et la compacité constitue un indicateur complémentaire à l'essai de compactage à la PCG.

### c) Résistance à la déformation permanente (essais d'orniérage) selon NF EN 12697-22

L'essai d'orniérage indique si un enrobé est résistant aux grandes déformations imposées par des charges répétées comparables aux sollicitations sur route.

Le principe de l'essai consiste à mesurer la profondeur de l'ornière (sans le bourrelet) en fonction du nombre de cycles (aller et retour) en pourcentage de l'épaisseur de la dalle.

Les conditions de l'essai sont les suivantes :
- pression du pneumatique : P = 600 +/- 30 kPa
- charge roulante appliquée : F= 5000 N+/- 50N
- fréquence du roulement relatif : 1 Hz /- 0,1 Hz
- température de l'essai : les éprouvettes sont conditionnées à 60°C ;
- profondeur d'ornière mesurée à 1000, 3000, 10000 et 30000 cycles ;
- les dalles soumises à l'essai d'orniérage sont de 50 mm ou 100 mm en fonction de l'épaisseur d'application moyenne du mélange.

### d) Essai de macrotexture - détermination de la Profondeur Moyenne de Texture (PMT) selon la norme NF EN 13036-1

L'essai de macrotexture peut être déterminé par la méthode volumétrique de la mesure de la PMT.

Pour cet essai, on verse 25 cm (V) de billes de verre calibrées, on étale les billes à l'aide du disque spécial en une plage circulaire et on mesure au moins quatre diamètres (calculer S), et on détermine la PMT selon la formule PMT = V/S en mm.

### e) Essai de résistance au polissage, essai « Friction After Polishing » (FAP) ou essai Wehner & Schulze ont été réalisés selon la NF EN 12697-49.

Cet essai permet de reproduire l'usure induite par le trafic et de suivre l'évolution du coefficient de frottement.

Un échantillon est soumis à abrasion par du corindon, puis il subit un polissage par voie humide avec de la silice.

Après 90000 cycles de polissage, l'échantillon est rincé, puis il est mis en rotation à une vitesse de 100 km/h tout en étant arrosé. Des patins viennent alors freiner l'échantillon. On mesure le couple lors de la décélération à 60 km/h afin de déterminer le coefficient de frottement : µFAP. Plus le coefficient µFAP est élevé, meilleur est la résistance au polissage et donc l'adhérence.

### 2. Matières premières

Les matières premières suivantes ont été testées pour réaliser les compositions d'enrobé selon l'invention :

**Tableau 4**

| | |
|---|---|
| Bitume vierge | Bitume de grade 35/50 |
| Granulats naturels | Carrière de Quenast 0/2 et 6/10 |
| Granulat réfléchissant | Eclats de miroir 0/8 |
| Granulat avec effet Schiller | Syénite (Norvège) (2/5 mm) |

Répartition granulométrique des granulats minéraux naturels utilisés pour les essais :

**Tableau 5**

| | | | | | | | | | |
|---|---|---|---|---|---|---|---|---|---|
| Tamis en mm | Granulat | 0,063 | 2 | 4 | 8 | 10 | 12,5 | 14 | 16 |
| % de passant | **Composition 1** | 7,1 | 37,6 | 49,1 | 79,8 | 95,4 | 99,9 | 100,0 | 100,0 |
| % de passant | **Composition 2** | 6,9 | 37,1 | 48,6 | 82,3 | 95,9 | 99,9 | 100,0 | 100,0 |

### 3. Compositions des différents enrobés testées

Deux compositions d'enrobés selon l'invention ont été préparées et sont illustrées dans le tableau 6 ci-dessous (les pourcentages sont donnés en masse par rapport à la masse totale de la composition).

**Tableau 6**

| **Constituants** | **Composition 1 en %** | | **Composition 2 en %** | |
|---|---|---|---|---|
| Eclats de miroir 0/8 | 8,51 | 94.52 | 0,00 | 94,52 |
| Syénite 2/5 | 20,79 | | 28,36 | |
| Quenast 0/2 | 32,13 | | 37,80 | |
| Quenatst 6/10 | 32,13 | | 28,36 | |
| Filler | 0,96 | | | |
| Bitume | 5,48 | 5,48 | 5,48 | 5,48 |
| | | | | |

| Caractéristiques | | | | |
|---|---|---|---|---|
| Surface spécifique (m²/kg) | | 12,60 | | 12,41 |
| Module de richesse K | | 3.58 | | 3,59 |
| Masse volumique réelle pré-séchée des granulats (Mg/m³) | | 2,714 | | 2,714 |
| Masse volumique réelle de l'enrobé (Mg/m³) | | 2,491 | | 2,491 |

Les enrobés 1 et 2 de composition 1 et 2, respectivement ont été préparés selon le procédé ci-dessous :
- le bitume a été chauffé à 160°C ;
- les granulats 1 ou 2 ont été incorporés avec les granulats selon l'invention (à effet Schiller) avec éventuellement les éclats de miroirs, puis
- l'ensemble a été malaxé pendant 3 minutes à une température de 160°C.

Une composition d'enrobé selon l'art antérieur (nommé ci-après Compa.1) et comprenant notamment 28,36% d'éclats de miroir a été testée à titre comparatif. Elle a été fabriquée en suivant le procédé décrit ci-dessus et comprend la formulation illustrée dans le tableau 7 ci-dessous :

**Tableau 7**

| **Constituants** | **Composition Comparative en %** | |
|---|---|---|
| Eclats de miroir 0/8 | 28,36 | 94.52 |
| Syénite 2/5 | - | |
| Quenast 0/2 | 17,96 | |
| Quenast 4/6 | 16,07 | |
| Quenatst 6/10 | 29,29 | |
| Filler | 2,84 | |
| Bitume | 5.48 | 5.48 |
| | | |

| Caractéristiques Composition Comparative | | |
|---|---|---|
| Surface spécifique (m²/kg) | | 12,60 |
| Module de richesse K | | 3.57 |
| Masse volumique réelle pré-séchée des granulats (Mg/m³) | | 2,714 |
| Masse volumique réelle (Mg/m³) | | 2,491 |

### 4. Résultat

L'enrobé 2 a été testé et les résultats des essais figurent dans le tableau 8 ci-dessous :

**Tableau 8**

| **Caractéristiques** | | **Résultats** | **Norme** |
|---|---|---|---|
| Essai de maniabilité | 10G | 15,5 | ≥ 11 |
| (NF EN 12697-10) | 25G | 11,7 | |
| (NF EN 12697-31) | 40G | 9,8 | 8 à 13 |
| % de vide à : | 60G | 8,3 | |
| | 80G | 7,3 | |
| | 100G | 6,5 | |
| | 120G | 6,0 | |
| | 200G | 4,4 | |
| | PENTE | 3,63 | |
| Essai de sensibilité à l'eau (NF EN 12697-12) | M.V.A Géo. | 2193 | |
| | M.V.A. Hydro | 2274 | |
| | Vm (%) | 8,7 | |
| | Cd en KPa | 10372 | |
| | Cw en KPa | 9050 | |
| | Rapport i/C | 87 | ≥ 70 |
| | % abs. J+8 | 2,95 | |
| Résistance à la déformation permanente (NF EN 12697-22) | % de vides | 10,6 | |
| | Compacité (%) | 89,4 | |
| | 3000 cycles | 5,9 | |
| | 10 000 cycles | 6,9 | |
| | 30 000 cycles | 7,8 | ≤ 10 |
| PMT (NF EN 13036-1) | PMT en mm (90% des valeurs) | 0,69 | ≥ 0,5 |

L'enrobé 2 répond aux spécifications imposées pour une couche de roulement de type Béton Bitumeux Mince de type C (BBMc) de classe 3.

Les résultats de résistance au polissage sont illustrés sur le tableau 9 ci-dessous qui montre le coefficient de frottement après polissage µFAP selon la norme NF EN 12697-49 et sur le tableau 10, également ci-dessous, qui montre l'évolution de µFAP en fonction du nombre de cycles de polissage sans sablage préalable.

**Tableau 9**

| Cycles après sablage | Composition 1 | Composition 2 | Compa. 1 |
|---|---|---|---|
| 0 | 0,61 | 0,66 | 0,61 |
| 90000 cycles 60 km/h | 0,35 | 0,33 | 0,36 |

Comme le montre le tableau 9, on obtient pour les trois compositions, des valeurs de µFAP> 0.3 (valeur seuil), ce qui constitue une adhérence satisfaisante. On peut comparer ces valeurs à celles obtenues par des BBSG 0/10 constitués de granulats de diorite dont le PSV est > 50 pour lesquels les µFAP mesurés vont de 0,34 à 0,40.

**Tableau 10**

| Cycles de polissage | Composition 1 | Composition 2 |
|---|---|---|
| 0 | 0,33 | 0,35 |
| 5000 | 0,33 | 0,37 |
| 10000 | 0,36 | 0,37 |
| 15000 | 0,37 | 0,38 |
| 20000 | 0,38 | 0,38 |
| 90000 | 0,34 | 0,33 |
| 180000 | 0,31 | 0,30 |

Ainsi, l'utilisation de 30% en masse de la syénite selon l'invention, éventuellement substituée à hauteur de 10% de miroir, permet d'obtenir un revêtement de chaussée alliant performances mécaniques et optiques et peut être une alternative aux éclats de miroir.

Le tableau 10 montre ainsi que les compositions selon l'invention, et notamment la composition 2 comprenant des granulats Syénites (sans éclats de miroirs), présentent une résistance face au polissage satisfaisante.

## Revendications

1. Composition pour revêtement de voies de circulation ou éléments de sécurité et/ou de signalisation connexes comprenant au moins, en masse par rapport à la masse totale de ladite composition : de 4 à 6 % d'un liant hydrocarboné et de 94 à 96% d'un mélange granulaire, ledit mélange granulaire comprenant, en masse par rapport à sa masse totale :
de 0 à 4% de fillers ;
de 15 à 40% de sables ;
de 10 à 45% de gravillons ;
de 0 à 10% de débris de verre réfléchissant, et
**caractérisée en ce qu'**elle comprend de 20 à 40% d'un matériau minéral comprenant un ou plusieurs feldspaths aptes à réfléchir la lumière ayant des distances d'inter-couches de 50 à 100 nm et présentant un coefficient de Los Angeles (LA) mesuré, selon la norme NF EN 1097-2, inférieur ou égal à 30, un coefficient micro-DEVAL (MDE) mesuré selon la norme NF EN 1097-1 inférieur ou égal à 25, la somme LA + MDE ≤ 45 et un coefficient de polissage mesuré selon la norme NF EN 1097-8 supérieur à 44.

2. Composition pour revêtement selon la revendication 1, dans laquelle ledit matériau minéral présente une biréfringence allant de 0,004 à 0,012.

3. Composition pour revêtement selon la revendication 1 ou 2, dans laquelle ledit matériau minéral comprend un feldspath alcalin, tel qu'un feldspath potassique ou sodique ; un feldspath plagioclase, ou un de leurs mélanges.

4. Composition pour revêtement selon la revendication 3, dans laquelle le feldspath alcalin est choisi parmi l'espèce minérale suivante : l'albite, l'anorthose, la sanidine, l'orthose, le microcline ou un de leurs mélanges, de préférence parmi l'anorthose, et le feldspath plagioclase est choisi parmi l'espèce minérale suivante l'albite (péristérite), l'oliglase, l'andésine, la bytownite, l'anorthite, telle que la labradorite ou un de leurs mélanges.

5. Composition pour revêtement selon l'une des revendications précédentes, dans laquelle ledit matériau minéral est une roche ignée, de préférence une roche ignée plutonique comprenant, au poids, par rapport à son poids total, au moins 70% de feldspaths, de préférence au moins 80% de feldspaths.

6. Composition pour revêtement selon la revendication 5, dans laquelle la roche ignée plutonique est une roche syénite et/ou une roche gabbros.

7. Composition pour revêtement selon la revendication 6, dans laquelle la roche syénite est choisie parmi : une syénite alcaline, une syénite (sensu stricto), une monzonite ou une de leurs combinaisons et la roche gabbros est choisie parmi une anorthosite de type labrador.

8. Composition pour revêtement selon l'une des revendications précédentes, dans laquelle le liant hydrocarboné est choisi parmi un liant bitumineux, un liant végétal, un liant organo-minéral, un liant géopolymère ou un de leurs mélanges.

9. Composition pour revêtement selon l'une des revendications précédentes, dans laquelle le liant hydrocarboné présente un grade de pénétrabilité à 25°C déterminé selon la norme EN 1426 de 10/20, 15/25, 20/30, 40/60, 35/50 ou 50/70 1/10^{e} de mm.

10. Composition pour revêtement selon l'une des revendications précédentes, dans laquelle le mélange granulaire comprend, en masse, par rapport à sa masse totale de 6 à 10% de débris miroirs.

11. Composition pour revêtement selon l'une des revendications précédentes, dans laquelle le mélange granulaire comprend, en masse, par rapport à sa masse totale de 30 à 35% de sables 0/2.

12. Composition pour revêtement selon l'une des revendications précédentes, dans laquelle le mélange granulaire comprend, en masse, par rapport à sa masse totale de 8 à 30% de gravillons 0/10 mm.

13. Revêtement routier comprenant la composition selon l'une des revendications 1 à 12.

## Patentansprüche

1. Zusammensetzung zur Beschichtung von Fahrbahnen oder damit verbundenen Sicherheits- und/oder Signalelementen, umfassend mindestens, in Gewichtsprozent, bezogen auf das Gesamtgewicht der Zusammensetzung: 4 bis 6 % eines kohlenwasserstoffhaltigen Bindemittels und 94 bis 96 % einer granularen Mischung, wobei die granulare Mischung, in Gewichtprozent, bezogen auf ihr Gesamtgewicht, umfasst:
0 bis 4 % Füllstoffe;
15 bis 40 % Sand;
10 bis 45 % Splitt;
0 bis 10 % reflektierende Glassplitter und
**dadurch gekennzeichnet, dass** sie 20 bis 40 % eines mineralischen Materials umfasst, das einen oder mehrere Feldspate umfasst, die Licht reflektieren können, die Zwischenschichtabstände von 50 bis 100 nm aufweisen, und die einen Los-Angeles-Koeffizienten (LA), gemessen gemäß der Norm NF EN 1097-2, von kleiner oder gleich 30, einen Micro-DEVAL-Koeffizienten (MDE), gemessen gemäß der Norm NF EN 1097-1, von kleiner oder gleich 25, wobei die Summe LA + MDE ≤ 45 ist, und einen Polierkoeffizienten, gemessen gemäß der Norm NF EN 1097-8, von mehr als 44 aufweisen.

2. Beschichtungszusammensetzung nach Anspruch 1, wobei das mineralische Material eine Doppelbrechung im Bereich von 0,004 bis 0,012 aufweist.

3. Beschichtungszusammensetzung nach Anspruch 1 oder 2, wobei das mineralische Material einen Alkalifeldspat wie Kalium- oder Natriumfeldspat; einen Plagioklas-Feldspat oder eine Mischung davon umfasst.

4. Beschichtungszusammensetzung nach Anspruch 3, wobei der Alkalifeldspat aus den folgenden Mineralarten ausgewählt ist: Albit, Anorthoklas, Sanidin, Orthoklas, Mikroklin oder einer Mischung davon, vorzugsweise aus Anorthoklas, und der Plagioklas-Feldspat aus der folgenden mineralischen Art ausgewählt ist: Albit (Peristerit), Oligoklas, Andesin, Bytownit, Anorthit wie Labradorit oder einer Mischung davon.

5. Beschichtungszusammensetzung nach einem der vorhergehenden Ansprüche, wobei das mineralische Material ein Eruptivgestein, vorzugsweise ein plutonisches Eruptivgestein ist, das, bezogen auf sein Gesamtgewicht, mindestens 70 % Feldspate, vorzugsweise mindestens 80 % Feldspate umfasst.

6. Beschichtungszusammensetzung nach Anspruch 5, wobei das plutonische Eruptivgestein ein Syenit- und/oder Gabbrosgestein ist.

7. Beschichtungszusammensetzung nach Anspruch 6, wobei das Syenitgestein ausgewählt ist aus: einem alkalischen Syenit, einem Syenit (im engeren Sinne), einem Monzonit oder einer Kombination davon, und Gabbrosgestein ausgewählt ist aus einem Labradorit-Anorthosit.

8. Beschichtungszusammensetzung nach einem der vorhergehenden Ansprüche, wobei das kohlenwasserstoffhaltige Bindemittel ausgewählt ist aus einem bituminösen Bindemittel, einem pflanzlichen Bindemittel, einem organomineralischen Bindemittel, einem geopolymeren Bindemittel oder einer Mischung davon.

9. Beschichtungszusammensetzung nach einem der vorhergehenden Ansprüche, wobei das kohlenwasserstoffhaltige Bindemittel einen Eindringungsgrad bei 25 °C, bestimmt gemäß der Norm EN 1426, von 10/20, 15/25, 20/30, 40/60, 35/50 oder 50/70 1/10^{e} mm aufweist.

10. Beschichtungszusammensetzung nach einem der vorhergehenden Ansprüche, wobei die granulare Mischung, in Gewichtsprozent, bezogen auf ihr Gesamtgewicht, 6 bis 10 % Spiegelsplitter umfasst.

11. Beschichtungszusammensetzung nach einem der vorhergehenden Ansprüche, wobei die granulare Mischung, in Gewichtsprozent, bezogen auf ihr Gesamtgewicht, 30 bis 35 % Sand 0/2 umfasst.

12. Beschichtungszusammensetzung nach einem der vorhergehenden Ansprüche, wobei die granulare Mischung, in Gewichtsprozent, bezogen auf ihr Gesamtgewicht, 8 bis 30 % Splitt 0/10 mm umfasst.

13. Fahrbahnbeschichtung, umfassend die Zusammensetzung nach einem der Ansprüche 1 bis 12.

## Claims

1. Composition for surfacing roadways or related safety and/or signage elements, comprising at least, by mass with respect to the total mass of said composition: from 4% to 6% hydrocarbon binder and 94% to 96% granular mixture, said granular mixture comprising, by mass with respect to the total mass thereof:
0% to 4% fillers;
15% to 40% sands;
10% to 45% gravel;
0 to 10% reflective glass debris, and
**characterised in that** it comprises from 20% to 40% mineral material comprising one or more feldspars able to reflect light having interlayer distances of 50 nm to 100 nm and having a Los Angeles (LA) coefficient measured according to NF EN 1097-2 of less than or equal to 30, a Micro-Deval (MDe) coefficient measured in accordance with NF EN 1097-1 of less than or equal to 25, the sum LA + MDe ≤ 45, and a polishing coefficient measured in accordance with NF EN 1097-8 greater than 44.

2. Composition for surfacing according to claim 1, wherein said mineral material has a birefringence ranging from 0.004 to 0.012.

3. Composition for surfacing according to claim 1 or 2, wherein said mineral material comprises an alkaline feldspar such as a potassium or sodium feldspar; a plagioclase feldspar, or a mixture thereof.

4. Composition for surfacing according to claim 3, wherein the alkaline feldspar is chosen from the following mineral species: albite, anorthosite, sanidine, orthosite, microcline or a mixture thereof, preferably from anorthosite, and the plagioclase feldspar is chosen from the following mineral species: albite (peristerite), oliglase, andesine, bytownite, anorthite, such as labradorite, or a mixture thereof.

5. Composition for surfacing according to any of the preceding claims, wherein said mineral material is an igneous rock, preferably a plutonic igneous rock comprising, by weight, with respect to its total weight, at least 70% feldspars, preferably at least 80% feldspars.

6. Composition for surfacing according to claim 5, wherein the plutonic igneous rock is a syenite rock and/or a gabbro rock.

7. Composition for surfacing according to claim 6, wherein the syenite rock is chosen from: an alkaline syenite, a syenite (in the strict sense), a monzonite or a combination thereof, and the gabbro rock is chosen from an anorthosite of the labrador type.

8. Composition for surfacing according to any of the preceding claims, wherein the hydrocarbon binder is chosen from a bituminous binder, a plant-based binder, an organomineral binder, a geopolymer binder or a mixture thereof.

9. Composition for surfacing according to any of the preceding claims, wherein the hydrocarbon binder has a penetrability grade at 25°C determined according to EN 1426 of 10/20, 15/25, 20/30, 40/60, 35/50 or 50/70 1/10^{th} of mm.

10. Composition for surfacing according to any of the preceding claims, wherein the granular mixture comprises, by mass, with respect to the total mass thereof, from 6% to 10% mirror debris.

11. Composition for surfacing according to any of the preceding claims, wherein the granular mixture comprises, by mass, with respect to the total mass thereof, from 30% to 35% 0/2 sands.

12. Composition for surfacing according to any of the preceding claims, wherein the granular mixture comprises, by mass, with respect to the total mass thereof, from 8% to 30% 0/10 mm gravel.

13. Road surfacing comprising the composition according to any of claims 1 to 12.
